# EUROPEAN PATENT APPLICATION

(11) **EP 4 699 708 A1**
(43) Date of publication of application: **25.02.2026**
(21) Application number: 24796947.0
(22) Date of filing: 19.04.2024
(51) Int. Cl.: B05D 1/26, B05D 7/24, C09D 5/02, C09D 7/61, C09D 7/63, C09D 201/00

(54) **METHOD FOR PRODUCING COMPOSITE MATERIAL**

(30) Priority: 28.04.2023 JP 2023074526
(71) Applicant: Resonac Corporation, Tokyo 105-7325 (JP)
(72) Inventor: MARUYAMA, Naoki, Tokyo 105-7325 (JP); IZUMI, Hiroyuki, Tokyo 105-7325 (JP)
(74) Representative: Hoffmann Eitle
(86) International application number: PCT/JP2024/015640
(87) International publication number: WO 2024/225200

(57) **Abstract**

A method for producing a composite material, the method comprising: a coating film formation step of discharging a coating liquid containing aerogel particles, a binder resin, glass fibers, and a liquid medium toward an object to obtain a coating film; and a removal step of removing at least a part of the liquid medium from the coating film to obtain a composite material.

## Description

### Technical Field

The present invention relates to a method for producing a composite material.

### Background Art

Aerogel is known as a material excellent as a heat insulating material. In addition, a method has been proposed in which an aerogel is processed into particles and used as a constituent material of a heat insulating material (for example, Patent Literatures 1 and 2). Patent Literature 1 proposes that a particulate aerogel is used as a filler between resin plates and the like constituting a heat insulating window. Patent Literature 2 discloses a method for producing a heat insulating material (molded body) by preparing an aqueous dispersion containing aerogel particles and organic fibers and then further press-molding an intermediate product obtained by evaporating water.

### Citation List

### Patent Literature

Patent Literature 1: Japanese Unexamined Patent Publication No. 2012-091943
Patent Literature 2: Japanese Unexamined Patent Publication No. 2014-035044

### Summary of Invention

### Technical Problem

A composite material containing aerogel particles and a binder resin is expected to have expanded applications and uses by being made into a coating liquid.

The present inventors have studied the blending of further materials into the composite material, and have found that by blending glass fibers, a high film strength suitable for a heat insulating material is achieved. However, according to the findings of the present inventors, when attempting to make a composite material blended with glass fibers into a coating liquid, there is a problem that cracking is likely to occur during film formation, making it difficult to form a uniform composite material.

Therefore, an object of the present invention is to provide a method for producing a composite material, by which a composite material containing aerogel particles, a binder resin, and glass fibers and having less cracking can be easily produced.

### Solution to Problem

The present invention relates to, for example, the following [1] to [10].
[1] A method for producing a composite material, the method comprising:
   a coating film formation step of discharging a coating liquid containing aerogel particles, a binder resin, glass fibers, and a liquid medium toward an object to obtain a coating film; and
   a removal step of removing at least a part of the liquid medium from the coating film to obtain a composite material.
[2] The method for producing a composite material according to [1], wherein the coating film formation step is a step of discharging the coating liquid toward the object by means of a discharge device selected from the group consisting of a spray and a dispenser.
[3] The method for producing a composite material according to [2], wherein the discharge device has a discharge port for discharging the coating liquid, and an inner diameter of the discharge port is 1.5 mm or more.
[4] The method for producing a composite material according to any one of [1] to [3], wherein the coating liquid further contains a water-soluble polymer having a hydrophobic group.
[5] The method for producing a composite material according to [4], wherein the hydrophobic group is an alkyl group having 6 to 26 carbon atoms.
[6] The method for producing a composite material according to any one of [1] to [5], wherein the coating liquid contains emulsion particles containing the binder resin.
[7] The method for producing a composite material according to [6], wherein the emulsion particles further contain a nonionic emulsifier.
[8] The method for producing a composite material according to any one of [1] to [7], wherein at least a part of the aerogel particles forms aggregates.
[9] The method for producing a composite material according to any one of [1] to [8], further comprising:
   an emulsion preparation step of preparing an emulsion including emulsion particles containing a binder resin and a first liquid medium;
   a dispersion preparation step of mixing aerogel particles, glass fibers, and a second liquid medium to obtain a dispersion containing the aerogel particles, the glass fibers, and the second liquid medium; and
   a coating liquid preparation step of mixing the emulsion and the dispersion to obtain the coating liquid.
[10] The method for producing a composite material according to [9], wherein the dispersion preparation step is a step of mixing the aerogel particles, the glass fibers, and the second liquid medium to aggregate at least a part of the aerogel particles, and the coating liquid contains aggregates of the aerogel particles.

### Advantageous Effects of Invention

According to the present invention, provided is a method for producing a composite material, by which a composite material containing aerogel particles, a binder resin, and glass fibers and having less cracking can be easily produced.

### Description of Embodiments

Hereinafter, preferred embodiments of the present invention will be described in detail. However, the present invention is not limited to the following embodiments. In the present specification, a numerical range indicated using "to" indicates a range including numerical values described before and after "to" as a minimum value and a maximum value, respectively. "A or B" means that it may include either one of A and B, or may include both. The materials exemplified in the present embodiment can be used alone or in combination of two or more unless otherwise specified.

The method for producing a composite material of the present embodiment includes a step of discharging a coating liquid containing aerogel particles, a binder resin, glass fibers, and a liquid medium toward an object to obtain a coating film (coating film formation step), and a step of removing at least a part of the liquid medium from the coating film to obtain a composite material (removal step).

According to the findings of the present inventors, when glass fibers are further blended into a composite material containing aerogel particles and a binder resin, a high film strength suitable for a heat insulating material is achieved. However, when a coating liquid containing aerogel particles, a binder resin, glass fibers, and a liquid medium is applied to an object using a roller, a trowel, or the like, there has been a problem that cracking is likely to occur during drying of the coating film.

In the production method of the present embodiment, a coating film is formed by discharging the coating liquid onto the object. By forming the coating film in this manner, cracking is less likely to occur during drying of the coating film, and a composite material having high film strength and less cracking can be easily formed.

The reason why such an effect is achieved is considered as follows. For example, when a roller is used, it is considered that components other than the glass fibers in the coating liquid mainly penetrate the roller and are applied, which reduces the density of glass fibers in the coating film and promotes the occurrence of cracking. In addition, when a trowel is used, it is considered that the glass fibers are oriented in the application direction, and this orientation promotes the occurrence of cracking. In contrast, in the production method of the present embodiment, since the coating film is formed by discharging the coating liquid onto the object, the density of glass fibers does not decrease and the orientation of the glass fibers is less likely to occur, and thus it is considered that cracking is less likely to occur.

In the present embodiment, the coating liquid may further contain a water-soluble polymer having a hydrophobic group. This improves the dispersibility of the aerogel particles, making it possible to prepare a coating liquid with a higher filling amount of aerogel particles, and making it easier to obtain a more uniform composite material.

In the present embodiment, the coating liquid may be one that contains emulsion particles containing a binder resin. By dispersing the binder resin as emulsion particles, the dispersibility of the binder resin is improved, and a more uniform composite material can be easily formed.

In the present embodiment, a part or all of the aerogel particles in the coating liquid may form aggregates. This reduces the contact interface between the aerogel particles and the resin component (binder resin) during the formation of the composite material, suppresses the penetration of the resin component into the pores of the aerogel particles, and tends to result in a composite material with higher heat insulating properties.

The method for producing a composite material of the present embodiment may further include a step of preparing an emulsion including emulsion particles containing a binder resin and a first liquid medium (emulsion preparation step), a step of mixing aerogel particles, glass fibers, and a second liquid medium to obtain a dispersion containing the aerogel particles, the glass fibers, and the second liquid medium (dispersion preparation step), and a step of mixing the emulsion and the dispersion to obtain the coating liquid (coating liquid preparation step).

In addition, the dispersion preparation step may be a step of mixing the aerogel particles, the glass fibers, and the second liquid medium to aggregate at least a part of the aerogel particles.

Hereinafter, each step in the method for producing a composite material of the present embodiment will be described in detail.

### [Coating Film Formation Step]

In the coating film formation step, a layer of the coating liquid (coating film) is formed on the object by discharging the coating liquid onto the object.

The object is an object to which the composite material is applied and is not limited. The object may be, for example, a resin member, a metal member, a building material, or the like.

The discharge of the coating liquid may be performed, for example, using a discharge device selected from the group consisting of a spray (for example, an air spray) and a dispenser. The discharge device may have a discharge port for discharging the coating liquid. The inner diameter of the discharge port may be, for example, 1.5 mm or more, and may be 2.0 mm or more, 2.5 mm or more, or 3.0 mm or more. In addition, the inner diameter of the discharge port may be, for example, 10.0 mm or less, and may be 7.0 mm or less, 6.0 mm or less, or 5.0 mm or less.

### <Removal Step>

In the removal step, a composite material is formed by removing at least a part of the liquid medium from the coating film formed in the coating film formation step.

The method for removing the liquid medium from the coating film is not particularly limited, and examples thereof include a method of performing a heating treatment (for example, at 40 to 150°C), a reduced pressure treatment (for example, at 10000 Pa or less), or both of these treatments.

The thickness of the composite material is not particularly limited, and may be, for example, 0.05 mm or more, and may be 0.1 mm or more, 0.5 mm or more, or 1 mm or more. In addition, the thickness of the composite material may be, for example, 30 mm or less, and may be 20 mm or less, 10 mm or less, or 5 mm or less.

The composite material has pores originating from the aerogel particles. The pore volume of the composite material is preferably 0.15 cm³/g or more, more preferably 0.20 cm³/g or more, and still more preferably 0.60 cm³/g or more, from the viewpoint of obtaining higher heat insulating properties. The upper limit of the pore volume of the composite material is not particularly limited. The pore volume of the composite material may be, for example, 5.0 cm³/g or less.

The thermal conductivity of the composite material is, for example, 0.05 W/(m·K) or less, preferably 0.04 W/(m·K) or less, and more preferably 0.035 W/(m·K) or less. The lower limit of the thermal conductivity of the composite material is not particularly limited. The thermal conductivity of the composite material may be, for example, 0.01 W/(m·K) or more.

The composite material has excellent heat insulating properties derived from the aerogel. Therefore, the composite material can be suitably used for applications such as a heat insulating material in cryogenic containers, the aerospace field, architectural fields such as piping and exterior walls, automotive fields such as car air conditioning units and engines, home appliance fields such as refrigerators and freezers, the semiconductor field, and industrial equipment such as piping and tanks. In addition, the composite material can be used not only as a heat insulating material but also as a water repellent material, a sound absorbing material, a vibration suppressing material, a catalyst support material, and the like.

### <Production of Coating Liquid>

In the present embodiment, the coating liquid may be produced, for example, by mixing aerogel particles, a binder resin, glass fibers, and a liquid medium.

In the present embodiment, the coating liquid may be produced by a production method including a preparation step of preparing aerogel particles, a binder resin, and a liquid medium, and a mixing step of mixing the aerogel particles, the binder resin, and the liquid medium prepared in the preparation step to aggregate the aerogel particles and obtain a coating liquid containing aggregates of the aerogel particles, the binder resin, and the liquid medium.

In the preparation step, components other than the aerogel particles, the binder resin, and the liquid medium (for example, components described in [Other Components] below) may be further prepared.

In the mixing step, each component prepared in the preparation step is mixed so that the aerogel particles aggregate. The mixing method may be any method that allows the aerogel particles to form aggregates, and examples thereof include a method of stirring and mixing each component prepared in the preparation step.

The stirring speed affects the size of the aggregates. The higher the stirring speed, the greater the shear stress, so the size of the aggregates tends to decrease. Therefore, from the viewpoint of obtaining aggregates of a suitable size, which will be described later, it is desirable to mix at a low stirring speed.

In addition, the viscosity during mixing also affects the size of the aggregates. Even at the same stirring speed, the shear stress changes depending on the viscosity. If the viscosity is high, a larger shear stress is applied, and the aggregates tend to become smaller in size. On the other hand, if the viscosity is low, the shear stress becomes smaller, and the aggregates tend to become larger. Therefore, by adjusting the stirring speed according to the viscosity, a desired aggregate size can be achieved.

In addition, the amount of the liquid medium during mixing also affects the size of the aggregates. Even if the final composition is the same, the size of the aggregates differs between (A) a method in which the entire amount of the liquid medium is added from the beginning of mixing, and (B) a method in which mixing is performed with a small amount of the liquid medium at the beginning, and then the liquid medium is added later. The method (B) has a higher initial viscosity than the method (A). Therefore, in the method (B), the aggregates tend to become smaller in size than in the method (A). By using these methods properly according to the conditions such as the composition and the mixing device (stirring device), aggregates of a desired size can be formed.

The average diameter of the aggregates may be, for example, 20 µm or more, and may be 30 µm or more. When the average diameter of the aggregates is large, the contact interface between the aerogel and the binder resin becomes smaller, and the penetration of the resin into the pores of the aerogel is further suppressed. The average diameter of the aggregates may be, for example, 300 µm or less, and may be 200 µm or less or 150 µm or less. When the average diameter of the aggregates is small, a decrease in film strength due to the continuation of relatively brittle aerogel is suppressed, and a stronger composite material is more likely to be obtained.

The average diameter of the aggregates may be 2 times or more, and may be 3 times or more, with respect to the average diameter of the aerogel particles. When the average diameter of the aggregates is large, the contact interface between the aerogel and the binder resin becomes smaller, and the penetration of the resin into the pores of the aerogel is further suppressed. In addition, the average diameter of the aggregates may be 30 times or less, and may be 20 times or less or 15 times or less, with respect to the average diameter of the aerogel particles. When the average diameter of the aggregates is small, a decrease in film strength due to the continuation of relatively brittle aerogel is suppressed, and a stronger composite material is more likely to be obtained.

In the present specification, the average diameter of the aggregates indicates a value measured by the following method.

### [Method for Measuring Average Diameter of Aggregates in Coating Liquid]

About 20 g of the coating liquid is placed in a 100 mL poly-cup, and water is added in 2 g portions while stirring with a spatula to dilute it while gradually blending it in. The diluted sample is placed on a glass plate, and a micrograph of the sample is taken using an optical microscope (manufactured by OLYMPUS, model number: BX51). The obtained micrograph is analyzed using the image editing software ImageJ to determine the diameters of a plurality of aggregates in the micrograph. The average value of the obtained values is taken as the average diameter of the aggregates.

In the present specification, the average diameter of the aerogel particles is synonymous with the average particle size (D50) of the aerogel particles described above.

In the present embodiment, when a diluted solution obtained by diluting the coating liquid is observed with an optical microscope, it is preferable that the area occupied by aggregates with a diameter of 20 µm or more (more preferably aggregates with a diameter of 50 µm or more) is 50% or more, more preferably 60% or more, and still more preferably 70% or more, of the area occupied by the aerogel particles (including aggregates) in the field of view, and it may be 100%.

In the present specification, the diluted solution obtained by diluting the coating liquid and the method for observing the diluted solution may be the same as the sample prepared in [Method for measuring average diameter of aggregates in coating liquid] described above and the method for observing the sample. In addition, the "... area in the observation field" is obtained by analyzing a photomicrograph using image editing software ImageJ.

In the present embodiment, the coating liquid may be produced by a production method including: an emulsion preparation step of preparing an emulsion including emulsion particles containing a binder resin and a first liquid medium; a dispersion preparation step of mixing aerogel particles, glass fibers, and a second liquid medium to obtain a dispersion containing the aerogel particles, the glass fibers, and the second liquid medium; and a coating liquid preparation step of mixing the emulsion and the dispersion to obtain the coating liquid.

The emulsion preparation step is a step of preparing an emulsion including emulsion particles containing a binder resin and a first liquid medium.

The emulsion preparation step may be, for example, a step of performing emulsion polymerization of a monomer component, which will be described later, in the presence of an emulsifier in a first liquid medium to obtain an emulsion.

As the first liquid medium, the same ones as the liquid medium described later can be exemplified. The first liquid medium is preferably an aqueous solvent.

The emulsion polymerization may be carried out, for example, by a step (i) of mixing a monomer component and an emulsifier in a first liquid medium to obtain a monomer emulsion, and a step (ii) of mixing the monomer emulsion and a radical polymerization initiator to perform emulsion polymerization of the monomer component.

In step (i), the amount of the emulsifier may be, for example, 0.01 parts by mass or more, and may be 0.1 parts by mass or more, 0.3 parts by mass or more, 0.5 parts by mass or more, 0.7 parts by mass or more, 0.9 parts by mass or more, or 1 part by mass or more, with respect to 100 parts by mass of the monomer component. In addition, in step (i), the amount of the emulsifier may be, for example, 15 parts by mass or less, and may be 12 parts by mass or less, 10 parts by mass or less, 8 parts by mass or less, or 6 parts by mass or less, with respect to 100 parts by mass of the monomer component.

The radical polymerization initiator is not particularly limited as long as it is a polymerization initiator that can initiate the emulsion polymerization of the monomer component, and may be appropriately selected from known radical polymerization initiators.

Examples of the radical polymerization initiator include hydrogen peroxide, tert-butyl hydroperoxide, cumene hydroperoxide, 4,4'-azobis(4-cyanovaleric acid), 2,2'-azobis[N-(2-hydroxyethyl)-2-methylpropanamide], and the like.

In step (ii), the amount of the radical polymerization initiator may be, for example, 0.001 parts by mass or more, and may be 0.01 parts by mass or more, 0.05 parts by mass or more, or 0.1 parts by mass or more, with respect to 100 parts by mass of the monomer component. In addition, in step (ii), the amount of the radical polymerization initiator may be, for example, 5 parts by mass or less, and may be 3 parts by mass or less, 2 parts by mass or less, or 1 part by mass or less, with respect to 100 parts by mass of the monomer component.

In step (ii), a reducing agent may be used together with the radical polymerization initiator, if necessary. This promotes radical generation of the radical polymerization initiator. Examples of the reducing agent include reducing organic compounds such as ascorbic acid, tartaric acid, citric acid, and glucose, and reducing inorganic compounds such as thiourea dioxide and hydrazine.

In step (ii), neutralization may be performed with a neutralizing agent after the completion of the emulsion polymerization. The neutralizing agent is not particularly limited and may be a known neutralizing agent. Examples of the neutralizing agent include aqueous ammonia, morpholine, 2-amino-2-methyl-1-propanol, triethylamine, triethanolamine, sodium hydroxide, potassium hydroxide, and the like. The amount of the neutralizing agent is not particularly limited, and may be appropriately adjusted, for example, so that the pH of the resulting emulsion is 7 to 11 (preferably 8 to 10).

The emulsion obtained in step (ii) contains emulsion particles containing a binder resin. The average particle size of the emulsion particles in the emulsion may be, for example, 50 nm or more, and may be 70 nm or more, 90 nm or more, or 100 nm. In addition, the average particle size of the emulsion particles in the emulsion may be, for example, 400 nm or less, and may be 350 nm or less or 300 nm or less.

In the present specification, the average particle size of the emulsion particles in the emulsion indicates a value measured by a dynamic light scattering method (DLS) using MICROTRAC UPA150 (manufactured by MicrotracBEL Corp.) at 23°C.

The minimum film-forming temperature (MFT) of the emulsion obtained in step (ii) may be, for example, 25°C or lower, is preferably 20°C or lower, and more preferably 15°C or lower, from the viewpoint of further improving film formability. In addition, the minimum film-forming temperature (MFT) of the emulsion is preferably 10°C or lower, more preferably 8°C or lower, and may be 6°C or lower, from the viewpoint of being even more excellent in film formability at low temperatures. The lower limit of the minimum film-forming temperature (MFT) of the emulsion is not particularly limited. Note that in the case of a paint containing an aqueous solvent, an MFT of 0°C or lower cannot be measured.

The dispersion preparation step is a step of mixing aerogel particles, glass fibers, and a second liquid medium to obtain a dispersion containing the aerogel particles, the glass fibers, and the second liquid medium.

The dispersion preparation step may be a step of mixing the aerogel particles, the glass fibers, and the second liquid medium such that the aerogel particles aggregate, to obtain a dispersion containing aggregates of the aerogel particles, the glass fibers, and the second liquid medium.

As the second liquid medium, the same ones as the liquid medium described later can be exemplified. The second liquid medium is preferably an aqueous solvent.

The dispersion may further contain a water-soluble polymer having a hydrophobic group. That is, the dispersion preparation step may be a step of mixing aerogel particles, glass fibers, a water-soluble polymer having a hydrophobic group, and a second liquid medium to obtain a dispersion containing the aerogel particles, the glass fibers, the water-soluble polymer having a hydrophobic group, and the second liquid medium.

In the dispersion preparation step, the amount of the water-soluble polymer may be, for example, 0.1 parts by mass or more, and may be 0.5 parts by mass or more, 1 part by mass or more, 2 parts by mass or more, or 3 parts by mass or more, with respect to 100 parts by mass of the aerogel particles. In addition, in the dispersion preparation step, the amount of the water-soluble polymer may be, for example, 20 parts by mass or less, and may be 15 parts by mass or less or 10 parts by mass or less, with respect to 100 parts by mass of the aerogel particles.

In the dispersion preparation step, the mixing method is not particularly limited, and may be, for example, mixing by stirring.

The size of the aggregates in the dispersion is not particularly limited, and may be appropriately adjusted so that the size of the aggregates in the coating liquid is within a suitable range described later.

The coating liquid preparation step is a step of mixing the emulsion and the dispersion to obtain the coating liquid.

In the coating liquid preparation step, the mixing method is not particularly limited, and may be, for example, mixing by stirring. The mixing method in the coating liquid preparation step may be appropriately adjusted so that the size of the aggregates of the aerogel particles is within the suitable range described above.

Hereinafter, each component used in the method for producing a composite material of the present embodiment will be described in detail.

### <Binder Resin>

Examples of the binder resin include epoxy resins, silicone resins, phenol resins, urea resins, melamine resins, polyurethane resins, polyethylene resins, polypropylene resins, polystyrene resins, polyester resins, acrylic resins, polyvinyl chloride resins, polyvinyl acetate resins, polyamide resins, polyimide resins, polyvinyl-based resins, and the like.

In a preferred aspect, the binder resin may be, for example, a polymer of a monomer component having an ethylenically unsaturated bond. Such a binder resin has a structural unit (also referred to as a monomer unit) derived from the monomer component. Examples of the monomer component include acrylic compounds having a (meth)acryloyl group, aromatic vinyl compounds, heterocyclic vinyl compounds, vinyl esters, monoolefins, conjugated diolefins, α,β-unsaturated carboxylic acids, vinyl cyanides, and the like. These may be used alone or in combination of two or more.

Examples of the acrylic compound include (meth)acrylic acid alkyl esters. The alkyl group that the (meth)acrylic acid alkyl ester has may be linear, branched, or cyclic. The number of carbon atoms of the alkyl group that the (meth)acrylic acid alkyl ester has may be, for example, 1 to 20, 1 to 18, 1 to 16, or 1 to 14. Examples of the (meth)acrylic acid alkyl ester include methyl (meth)acrylate, ethyl (meth)acrylate, n-butyl (meth)acrylate, 2-ethylhexyl acrylate, isobutyl (meth)acrylate, tert-butyl (meth)acrylate, cyclohexyl (meth)acrylate, lauryl (meth)acrylate, stearyl (meth)acrylate, isobornyl (meth)acrylate, and the like.

Examples of the acrylic compound also include polar group-containing acrylic compounds having a (meth)acryloyl group and a polar group (a polar group other than the (meth)acryloyl group). Examples of the polar group include a hydroxy group, an amino group, a substituted amino group (for example, a dialkylamino group, a hydroxyalkylamino group, etc.), an amide group, a substituted amide group (for example, a dialkylamide group, a hydroxyalkylamide group, etc.), an epoxy group, a silyl group (for example, a trialkoxysilyl group, etc.), a cyano group, an isocyanate group, a phosphate group, a carbonyl group, and the like.

Examples of the polar group-containing acrylic compound include compounds in which a polar group is substituted on the alkyl group of a (meth)acrylic acid alkyl ester. Examples of such compounds include hydroxyalkyl (meth)acrylates (for example, hydroxyethyl (meth)acrylate, etc.), dialkylaminoalkyl (meth)acrylates (for example, dimethylaminoethyl (meth)acrylate, etc.), glycidyl (meth)acrylate, trialkoxysilylalkyl (meth)acrylates, isocyanatoalkyl (meth)acrylates (for example, 2-isocyanatoethyl (meth)acrylate, etc.), 2-(meth)acryloyloxyethyl acid phosphate, and the like.

Examples of the polar group-containing acrylic compound also include a compound in which a (meth)acryloyl group and a polar group are bonded. Examples of such a compound include (meth)acrylic acid, (meth)acrylamide, n-methylol (meth)acrylamide, diacetone acrylamide, and the like.

Examples of the polar group-containing acrylic compound also include diacetone (meth)acrylate, acetoacetoxyalkyl (meth)acrylate (for example, acetoacetoxyethyl (meth)acrylate), and the like.

Examples of the acrylic compound also include acrolein, vinyl alkyl ketone (for example, vinyl methyl ketone, etc.), and the like.

Examples of the aromatic vinyl compound include styrene, α-methylstyrene, p-methylstyrene, ethyl vinyl benzene, and the like.

Examples of the heterocyclic vinyl compound include vinylpyrrolidone, vinylfuran, vinylthiophene, vinyloxazoline, vinylpyrrole, and the like.

Examples of the vinyl esters include vinyl acetate, vinyl alkanoate, vinyl versatate, and the like.

Examples of the monoolefins include ethylene, propylene, butylene, isobutylene, and the like.

Examples of the conjugated diolefins include butadiene, isoprene, chloroprene, and the like.

Examples of the α,β-unsaturated carboxylic acid include crotonic acid, itaconic acid, maleic acid, fumaric acid, and anhydrides thereof.

Examples of the vinyl cyanides include acrylonitrile, methacrylonitrile, and the like.

As the monomer component, a compound selected from the group consisting of an acrylic compound, an aromatic vinyl compound, a heterocyclic vinyl compound, and an α,β-unsaturated carboxylic acid is preferable from the viewpoint that the above-mentioned effects are more remarkably exhibited.

The monomer component preferably contains an acrylic compound from the viewpoint of more remarkably exhibiting the above-mentioned effects. The content of the acrylic compound may be, for example, 50% by mass or more, and may be 60% by mass or more, 70% by mass or more, 80% by mass or more, 90% by mass or more, or 95% by mass or more, and may be 100% by mass, based on the total amount of the monomer component.

The acrylic compound preferably contains a (meth)acrylic acid alkyl ester from the viewpoint of more remarkably exhibiting the above-mentioned effects. The content of the (meth)acrylic acid alkyl ester may be, for example, 50% by mass or more based on the total amount of the monomer component, and from the viewpoint of further improving the water resistance of the composite material, may be 60% by mass or more, 70% by mass or more, 80% by mass or more, or 90% by mass or more. In addition, the content of the (meth)acrylic acid alkyl ester may be, for example, 99% by mass or less, and may be 97% by mass or less or 95% by mass or less, based on the total amount of the monomer component.

The acrylic compound may further contain a polar group-containing acrylic compound. The content of the polar group-containing acrylic compound may be, for example, 1% by mass or more, and may be 3% by mass or more or 5% by mass or more, based on the total amount of the monomer component. In addition, the content of the polar group-containing acrylic compound may be, for example, 30% by mass or less, and may be 25% by mass or less, 20% by mass or less, 15% by mass or less, or 10% by mass or less, based on the total amount of the monomer component.

The monomer component may be selected, for example, from the group consisting of methyl (meth)acrylate, n-butyl (meth)acrylate, 2-ethylhexyl (meth)acrylate, hydroxyethyl (meth)acrylate, (meth)acrylic acid, and styrene.

The monomer component may be appropriately selected so that the glass transition temperature (Tg) of the binder resin is within a suitable range described later. The glass transition temperature (Tg) of the binder resin can be measured by the method described in the Examples below.

Note that the glass transition temperature (Tg) of the binder resin can be estimated by the FOX equation from the weight ratio of each monomer unit constituting the binder resin and the Tg of the homopolymer of each monomer. The monomer component may be appropriately selected so that the glass transition temperature (Tg) of the binder resin is within a suitable range, with reference to the numerical value estimated by the FOX equation.

The glass transition temperature (Tg) of the binder resin may be, for example, 25°C or lower, is preferably 20°C or lower, and more preferably 15°C or lower, from the viewpoint of further improving film formability. In addition, the glass transition temperature (Tg) of the binder resin is preferably 10°C or lower, more preferably 8°C or lower, and may be 6°C or lower, from the viewpoint of being even more excellent in film formability at low temperatures. The lower limit of the glass transition temperature (Tg) of the binder resin is not particularly limited, and may be, for example, -40°C or higher, and may be -20°C or higher.

The binder resin can be produced, for example, by emulsion polymerization of the monomer component in a liquid medium (preferably an aqueous solvent) in the presence of an emulsifier. By this emulsion polymerization, emulsion particles containing the binder resin and the emulsifier are formed.

The emulsifier may be any emulsifier capable of emulsifying the binder resin, and may be a known emulsifier. Examples of the emulsifier include an anionic emulsifier, a nonionic emulsifier, and the like.

From the viewpoint of easily obtaining a coating liquid with low corrosiveness to metals, the emulsifier is preferably a nonionic emulsifier. It is considered that by selecting a nonionic emulsifier, corrosion of metals caused by ions that other emulsifiers (for example, anionic emulsifiers) have is suppressed.

The nonionic emulsifier may be any nonionic emulsifier capable of emulsifying the binder resin, and may be a known nonionic emulsifier. Examples of the nonionic emulsifier include polyoxyalkylene alkyl ethers, polyoxyalkylene alkylphenol ethers, polyoxyalkylene fatty acid esters, polyoxyalkylene sorbitan fatty acid esters, and the like, with polyoxyalkylene alkyl ethers being preferable, and polyoxyethylene alkyl ethers being more preferable.

The HLB value of the emulsifier is preferably 13 or more, and more preferably 14 or more, from the viewpoint that emulsification of the binder resin becomes easier, and is preferably 15 or more, and more preferably 16 or more, from the viewpoint of further improving the film formability of the coating liquid. In addition, the HLB value of the emulsifier is preferably 19 or less from the viewpoint of preventing a decrease in the water resistance of the composite material.

The content of the emulsifier may be, for example, 0.01 parts by mass or more with respect to 100 parts by mass of the binder resin, and from the viewpoint that surface drying of the coating film is delayed and film formability and through-drying properties are improved, may be 0.1 parts by mass or more, 0.3 parts by mass or more, 0.5 parts by mass or more, 0.7 parts by mass or more, 0.9 parts by mass or more, or 1 part by mass or more. In addition, the content of the emulsifier may be, for example, 15 parts by mass or less with respect to 100 parts by mass of the binder resin, and from the viewpoint of further improving the water resistance of the composite material, may be 12 parts by mass or less, 10 parts by mass or less, 8 parts by mass or less, or 6 parts by mass or less.

The average particle size of the emulsion particles may be, for example, 50 nm or more, and may be 70 nm or more, 90 nm or more, or 100 nm or more. In addition, the average particle size of the emulsion particles may be, for example, 400 nm or less, and may be 350 nm or less or 300 nm or less.

The content of the binder resin in the coating liquid may be, for example, 30% by mass or more, and may be 35% by mass or more, 40% by mass or more, or 45% by mass or more, based on the total amount of nonvolatile content in the coating liquid. In addition, the content of the binder resin in the coating liquid may be, for example, 80% by mass or less, and may be 75% by mass or less or 70% by mass or less, based on the total amount of nonvolatile content in the coating liquid.

The content of the binder resin in the coating liquid may be appropriately adjusted so that the content of the binder resin in the composite material is within a suitable range described later.

The content of the binder resin in the composite material may be, for example, 1% by volume or more, and may be 3% by volume or more, 5% by volume or more, or 10% by volume or more, based on the total volume of the composite material. In addition, the content of the binder resin in the composite material may be, for example, 40% by volume or less, and may be 30% by volume or less, 25% by volume or less, or 20% by volume or less, based on the total volume of the composite material.

### <Glass Fibers>

The glass fibers function as an anchor between the aerogel particles and can further improve the strength of the composite material.

The fiber diameter of the glass fibers may be, for example, 0.01 µm or more, and from the viewpoint of coating film strength, may be 0.1 µm or more, 1 µm or more, or 3 µm or more. In addition, the fiber diameter of the glass fibers may be, for example, 100 µm or less, and from the viewpoint of coating film smoothness, may be 50 µm or less or 30 µm or less.

The fiber length of the glass fibers may be, for example, 0.1 mm or more, and from the viewpoint of coating film strength, may be 1 mm or more, 1.5 mm or more, 2 mm or more, or 3 mm or more. In addition, the fiber length of the glass fibers may be, for example, 20 mm or less, and from the viewpoints of dispersibility and coating liquid dischargeability, may be 7 mm or less, or 5 mm or less.

The content of the glass fibers in the coating liquid may be, for example, 0.5% by mass or more, based on the total amount of nonvolatile content in the coating liquid, and from the viewpoint of coating film strength, may be 2% by mass or more, 3% by mass or more, or 5% by mass or more. In addition, the content of the glass fibers in the coating liquid may be, for example, 15% by mass or less, based on the total amount of nonvolatile content in the coating liquid, and from the viewpoints of dispersibility and coating liquid dischargeability, may be 12% by mass or less, or 10% by mass or less.

The content of the glass fibers in the coating liquid may be appropriately adjusted so that the content of the binder resin and the emulsifier in the composite material is within a suitable range described later.

The content of the glass fibers in the composite material may be, for example, 0.1% by volume or more, and may be 0.2% by volume or more, 0.3% by volume or more, or 0.4% by volume or more, based on the total volume of the composite material. In addition, the content of the glass fibers in the composite material may be, for example, 5% by volume or less, and may be 3% by volume or less, or 2% by volume or less, based on the total volume of the composite material.

### <Water-soluble polymer>

The water-soluble polymer may be any polymer as long as it has a hydrophobic group and has water solubility.

Examples of the hydrophobic group include an alkyl group (preferably, a long-chain alkyl group having 6 to 26 carbon atoms), an ester group, an alkoxy group, a halogen, and the like. Among these, as the hydrophobic group, an alkyl group is preferable, a long-chain alkyl group having 6 to 26 carbon atoms is more preferable, a long-chain alkyl group having 8 to 26 carbon atoms is still more preferable, a long-chain alkyl group having 10 to 26 carbon atoms is even more preferable, and it may be a long-chain alkyl group having 12 to 26 carbon atoms, or a long-chain alkyl group having 15 to 26 carbon atoms.

Examples of the water-soluble polymer include modified carboxyvinyl polymers, modified polyether urethanes, cellulose-based resins, polyethylene oxide, polyvinyl alcohol, polyacrylates, polyvinylpyrrolidone, dextrin-based resins, chitin-based resins, chitosan-based resins, and the like.

As the water-soluble polymer, a cellulose-based resin can be suitably used. Examples of the cellulose-based resin include methyl cellulose, carboxymethyl cellulose, hydroxyethyl cellulose, hydroxypropyl methyl cellulose, and modified products thereof that are further modified (for example, hydrophobized), and the like.

As the cellulose-based resin, a cellulose-based resin having an alkyl group is preferable, and a cellulose-based resin having a long-chain alkyl group with 6 to 26 carbon atoms is more preferable. According to such a cellulose-based resin, the effects of the present invention are more remarkably exhibited. The number of carbon atoms of the long-chain alkyl group is preferably 6 to 26, more preferably 8 to 26, still more preferably 10 to 26, even more preferably 12 to 26, and yet more preferably 15 to 26.

In the cellulose-based resin, the content of the long-chain alkyl group having 6 to 26 carbon atoms is preferably 0.01 to 5% by mass, and more preferably 0.01 to 3% by mass, based on the total amount of the cellulose-based resin.

As the cellulose-based resin, for example, a cellulose-based resin having a structural unit represented by the following formula (A-1) is preferable.

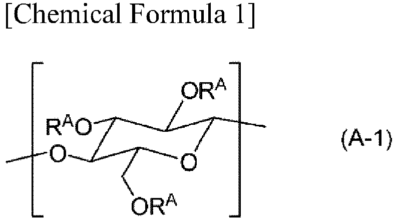

In formula (A-1), R^{A} represents a hydrogen atom, an alkyl group, a hydroxyalkyl group, a group represented by -R^{A1}-O-R^{A2} (wherein R^{A1} represents an alkanediyl group or a hydroxyalkanediyl group, and R^{A2} represents an alkyl group), or a group represented by -(R^{A3}O)ₙH (wherein R^{A3} represents an alkanediyl group, and n represents an integer of 2 or more). The three R^{A}s may be the same as or different from each other. However, at least one of the three R^{A}s is an alkyl group or a group represented by -R^{A1}-O-R^{A2}.

In formula (A-1), as the alkyl group in R^{A}, an alkyl group having 1 to 26 carbon atoms is preferable. In addition, the alkyl group in R^{A} is more preferably a short-chain alkyl group having 1 to 3 carbon atoms, or a long-chain alkyl group having 6 to 26 carbon atoms. The number of carbon atoms of the long-chain alkyl group is preferably 8 to 26, more preferably 10 to 26, still more preferably 12 to 26, and even more preferably 15 to 26.

In formula (A-1), as the hydroxyalkyl group in R^{A}, a hydroxyalkyl group having 1 to 26 carbon atoms is preferable, a hydroxyalkyl group having 1 to 10 carbon atoms is more preferable, and a hydroxyalkyl group having 1 to 5 carbon atoms is still more preferable.

In formula (A-1), the alkanediyl group in R^{A1} is preferably an alkanediyl group having 1 to 26 carbon atoms, more preferably an alkanediyl group having 1 to 10 carbon atoms, and still more preferably an alkanediyl group having 1 to 5 carbon atoms. In addition, the hydroxyalkanediyl group in R^{A1} is preferably a hydroxyalkanediyl group having 1 to 26 carbon atoms, more preferably a hydroxyalkanediyl group having 1 to 10 carbon atoms, and still more preferably a hydroxyalkanediyl group having 1 to 5 carbon atoms.

In formula (A-1), as R^{A2}, an alkyl group having 1 to 26 carbon atoms is preferable. In addition, the alkyl group in R^{A2} is more preferably a short-chain alkyl group having 1 to 3 carbon atoms, or a long-chain alkyl group having 6 to 26 carbon atoms, and is more preferably a long-chain alkyl group. The number of carbon atoms of the long-chain alkyl group is preferably 8 to 26, more preferably 10 to 26, still more preferably 12 to 26, and even more preferably 15 to 26.

In formula (A-1), as R^{A3}, an alkanediyl group having 2 to 3 carbon atoms is preferable, and an alkanediyl group having 3 carbon atoms is more preferable.

In formula (A-1), it is preferable that at least one of the three R^{A}s is a long-chain alkyl group, or that at least one of the three R^{A}s is a group represented by -R^{A1}-O-R^{A2} and R^{A2} is a long-chain alkyl group.

The content of the water-soluble polymer in the coating liquid may be, for example, 0.03% by mass or more, based on the total amount of nonvolatile content in the coating liquid, and from the viewpoint of further improving the dispersibility of the aerogel particles, may be 0.05% by mass or more, 0.07% by mass or more, 0.09% by mass or more, 0.2% by mass or more, 0.4% by mass or more, 0.6% by mass or more, or 0.8% by mass or more. In addition, the content of the water-soluble polymer in the coating liquid may be, for example, 6% by mass or less, based on the total amount of nonvolatile content in the coating liquid, and from the viewpoint of further improving the water resistance of the composite material, may be 5% by mass or less, 4% by mass or less, or 3% by mass or less.

The content of the water-soluble polymer in the coating liquid may be, for example, 0.1 parts by mass or more with respect to 100 parts by mass of the aerogel particles, and from the viewpoint of further improving the dispersibility of the aerogel particles, may be 0.5 parts by mass or more, 1 part by mass or more, 2 parts by mass or more, or 3 parts by mass or more. In addition, from the viewpoint of further improving the water resistance of the composite material, the content of the water-soluble polymer in the coating liquid may be, for example, 20 parts by mass or less, and may be 15 parts by mass or less or 10 parts by mass or less, with respect to 100 parts by mass of the aerogel particles.

The content of the water-soluble polymer in the coating liquid may be appropriately adjusted so that the content of the water-soluble polymer in the composite material is within a suitable range described later.

The content of the water-soluble polymer in the composite material may be, for example, 0.01% by volume or more, and may be 0.05% by volume or more, 0.1% by volume or more, or 0.15% by volume or more, based on the total volume of the composite material. In addition, the content of the water-soluble polymer in the composite material may be, for example, 1.5% by volume or less, and may be 1% by volume or less, based on the total volume of the composite material.

### <Aerogel>

In the present embodiment, "aerogel" means "a gel comprised of a microporous solid in which the dispersed phase is a gas," which is an aerogel in a broad sense.

The aerogel of the present embodiment is, for example, a silica aerogel containing silica as a main component. Examples of the silica aerogel include a so-called organic-inorganic hybridized silica aerogel into which an organic group (such as a methyl group) or an organic chain has been introduced.

Examples of the aerogel of the present embodiment include the following aspects. By adopting each aspect, an aerogel having heat insulating properties, flame retardancy, heat resistance, and flexibility corresponding to each aspect can be obtained.

### (First Aspect)

The aerogel of the present embodiment can have a structure represented by the following general formula (1). The aerogel according to the present embodiment can have a structure represented by the following general formula (1a) as a structure including the structure represented by formula (1).

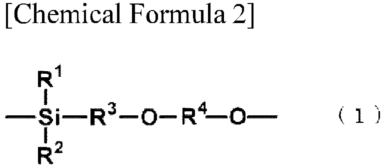

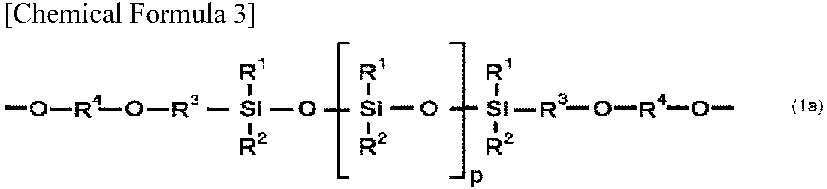

In formula (1) and formula (1a), R¹ and R² each independently represent an alkyl group or an aryl group, and R³ and R⁴ each independently represent an alkylene group. Here, examples of the aryl group include a phenyl group, a substituted phenyl group, and the like. Examples of the substituent of the substituted phenyl group include an alkyl group, a vinyl group, a mercapto group, an amino group, a nitro group, a cyano group, and the like. p represents an integer of 1 to 50. In formula (1a), the two or more R¹s may be the same as or different from each other, and similarly, the two or more R²s may be the same as or different from each other. In formula (1a), the two R³s may be the same as or different from each other, and similarly, the two R⁴s may be the same as or different from each other.

By introducing the structure represented by the above formula (1) or formula (1a) as an aerogel component into the skeleton of the aerogel, a flexible aerogel with low thermal conductivity is obtained. From such a viewpoint, in formula (1) and formula (1a), examples of R¹ and R² each independently include an alkyl group having 1 to 6 carbon atoms, a phenyl group, and the like, and examples of the alkyl group include a methyl group and the like. In addition, in formula (1) and formula (1a), examples of R³ and R⁴ each independently include an alkylene group having 1 to 6 carbon atoms and the like, and examples of the alkylene group include an ethylene group, a propylene group, and the like. In formula (1a), p can be 2 to 30, and may be 5 to 20.

### (Second Aspect)

The aerogel of the present embodiment can have a ladder-type structure provided with struts and bridges, and the bridges can have a structure represented by the following general formula (2). By introducing such a ladder-type structure as an aerogel component into the skeleton of the aerogel, heat resistance and mechanical strength can be improved. In the present embodiment, the "ladder-type structure" is one having two struts and bridges connecting the struts to each other (one having a so-called "ladder" form). In this aspect, the skeleton of the aerogel may be composed of a ladder-type structure, but the aerogel may partially have a ladder-type structure.

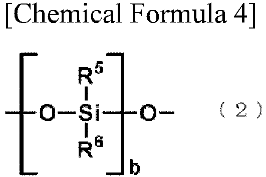

In formula (2), R⁵ and R⁶ each independently represent an alkyl group or an aryl group, and b represents an integer of 1 to 50. Here, examples of the aryl group include a phenyl group, a substituted phenyl group, and the like. In addition, examples of the substituent of the substituted phenyl group include an alkyl group, a vinyl group, a mercapto group, an amino group, a nitro group, a cyano group, and the like. In formula (2), when b is an integer of 2 or more, the two or more R⁵s may be the same as or different from each other, and similarly, the two or more R⁶s may also be the same as or different from each other.

By introducing the above structure as an aerogel component into the skeleton of the aerogel, for example, an aerogel having flexibility superior to that of a conventional aerogel having a structure derived from a ladder-type silsesquioxane is obtained.

The structure serving as the struts and its chain length, as well as the interval of the structure serving as the bridges, are not particularly limited, but from the viewpoint of further improving heat resistance and mechanical strength, the ladder-type structure may have a ladder-type structure represented by the following general formula (3).

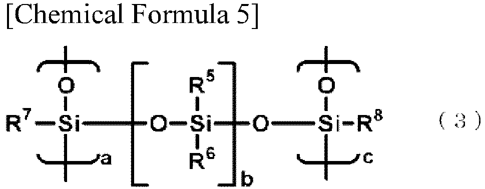

In formula (3), R⁵, R⁶, R⁷, and R⁸ each independently represent an alkyl group or an aryl group, a and c each independently represent an integer of 1 to 3000, and b represents an integer of 1 to 50. Here, examples of the aryl group include a phenyl group, a substituted phenyl group, and the like. In addition, examples of the substituent of the substituted phenyl group include an alkyl group, a vinyl group, a mercapto group, an amino group, a nitro group, a cyano group, and the like. In formula (3), when b is an integer of 2 or more, the two or more R⁵s may be the same as or different from each other, and similarly, the two or more R⁶s may also be the same as or different from each other. In addition, in formula (3), when a is an integer of 2 or more, the two or more R⁷s may be the same as or different from each other, and similarly, when c is an integer of 2 or more, the two or more R⁸s may be the same as or different from each other.

From the viewpoint of obtaining more excellent flexibility, in formulas (2) and (3), examples of R⁵, R⁶, R⁷, and R⁸ (provided that R⁷ and R⁸ are only in formula (3)) each independently include an alkyl group having 1 to 6 carbon atoms, a phenyl group, and the like, and examples of the alkyl group include a methyl group and the like. In addition, in formula (3), a and c can each independently be 6 to 2000, but may be 10 to 1000. In addition, in formulas (2) and (3), b can be 2 to 30, but may be 5 to 20.

### (Third Aspect)

The aerogel of the present embodiment may be a dried product of a wet gel that is a condensate of a sol containing at least one selected from the group consisting of a silicon compound having a hydrolyzable functional group or a condensable functional group, and a hydrolysis product of a silicon compound having a hydrolyzable functional group (one obtained by drying a wet gel generated from a sol). The aerogels described so far may also be obtained by drying a wet gel generated from a sol containing a silicon compound or the like in this manner.

As the silicon compound having a hydrolyzable functional group or a condensable functional group, a polysiloxane compound can be used. That is, the sol can contain at least one compound selected from the group consisting of a polysiloxane compound having a hydrolyzable functional group or a condensable functional group, and a hydrolysis product of a polysiloxane compound having a hydrolyzable functional group (hereinafter, sometimes referred to as "polysiloxane compound group").

The functional group in the polysiloxane compound is not particularly limited, but can be a group that reacts with the same functional group or reacts with another functional group. Examples of the hydrolyzable functional group include an alkoxy group. Examples of the condensable functional group include a hydroxyl group, a silanol group, a carboxyl group, a phenolic hydroxyl group, and the like. The hydroxyl group may be contained in a hydroxyl group-containing group such as a hydroxyalkyl group. The polysiloxane compound having a hydrolyzable functional group or a condensable functional group may further have a reactive group different from the hydrolyzable functional group and the condensable functional group (a functional group that does not fall under the hydrolyzable functional group and the condensable functional group). Examples of the reactive group include an epoxy group, a mercapto group, a glycidoxy group, a vinyl group, an acryloyl group, a methacryloyl group, an amino group, and the like. The epoxy group may be contained in an epoxy group-containing group such as a glycidoxy group. These polysiloxane compounds having a functional group and a reactive group may be used alone or in a mixture of two or more. Among these functional groups and reactive groups, examples of groups that improve the flexibility of the aerogel include an alkoxy group, a silanol group, a hydroxyalkyl group, and the like, and among these, an alkoxy group and a hydroxyalkyl group can further improve the compatibility of the sol. In addition, from the viewpoint of improving the reactivity of the polysiloxane compound and reducing the thermal conductivity of the aerogel, the number of carbon atoms of the alkoxy group and the hydroxyalkyl group can be 1 to 6, but from the viewpoint of further improving the flexibility of the aerogel, it may be 2 to 5, or 2 to 4.

### (Fourth Aspect)

From the viewpoints of further toughening and achieving even more excellent heat insulating properties and flexibility, the aerogel according to the present embodiment may further contain silica particles in addition to the aerogel component. An aerogel containing an aerogel component and silica particles can also be referred to as an aerogel composite. It is considered that the aerogel composite, while being a composite of the aerogel component and the silica particles, has a cluster structure, which is a characteristic of aerogels, and has a three-dimensionally fine porous structure.

The aerogel containing the aerogel component and the silica particles can be said to be a dried product of a wet gel that is a condensate of a sol containing at least one selected from the group consisting of the above-mentioned silicon compound having a hydrolyzable functional group or a condensable functional group, and a hydrolysis product of a silicon compound having a hydrolyzable functional group, and silica particles. Therefore, the descriptions regarding the first to third aspects can be applied mutatis mutandis to the aerogel according to the present embodiment as appropriate.

The silica particles can be used without particular limitation, and examples thereof include amorphous silica particles. Examples of the amorphous silica particles include fused silica particles, fumed silica particles, colloidal silica particles, and the like. Among these, colloidal silica particles have high monodispersibility, and it is easy to suppress aggregation in the sol. The silica particles may be silica particles having a hollow structure, a porous structure, or the like.

The shape of the silica particles is not particularly limited, and examples thereof include a spherical shape, a cocoon shape, an associated shape, and the like. Among these, by using spherical particles as the silica particles, it becomes easy to suppress aggregation in the sol. The average primary particle size of the silica particles may be 1 nm or more, may be 5 nm or more, and may be 20 nm or more, from the viewpoint that it is easy to impart appropriate strength and flexibility to the aerogel and an aerogel excellent in shrinkage resistance during drying is easily obtained. The average primary particle size of the silica particles may be 500 nm or less, may be 300 nm or less, and may be 100 nm or less, from the viewpoint that it becomes easy to suppress the solid thermal conduction of the silica particles and an aerogel excellent in heat insulating properties is easily obtained. From these viewpoints, the average primary particle size of the silica particles may be 1 to 500 nm, may be 5 to 300 nm, and may be 20 to 100 nm.

In the present embodiment, the average particle size of the aerogel component and the average primary particle size of the silica particles can be obtained by directly observing the aerogel using a scanning electron microscope (hereinafter abbreviated as "SEM"). The "diameter" here means the diameter when the cross-section of a particle exposed on the cross-section of the aerogel is regarded as a circle. In addition, "the diameter when the cross-section is regarded as a circle" is the diameter of a perfect circle when the area of the cross-section is replaced with a perfect circle of the same area. In calculating the average particle size, the diameters of 100 particles are determined, and the average thereof is taken.

The average particle size of the silica particles can also be measured from the raw material. For example, the biaxial average primary particle size is calculated as follows from the results of observing 20 arbitrary particles with an SEM. That is, taking colloidal silica particles dispersed in water at a solid content concentration of about 5 to 40% by mass as an example, a chip obtained by cutting a wafer with a pattern wiring into a 2 cm square is immersed in a dispersion of the colloidal silica particles for about 30 seconds, then the chip is rinsed with pure water for about 30 seconds and dried by nitrogen blowing. Thereafter, the chip is placed on a sample stage for SEM observation, an acceleration voltage of 10 kV is applied, and the silica particles are observed at a magnification of 100,000 times to take an image. Twenty silica particles are arbitrarily selected from the obtained image, and the average of the particle sizes of these particles is taken as the average particle size.

### <Aerogel Particles>

The aerogel particles in the present embodiment can be obtained, for example, by pulverizing a bulk aerogel as described later.

The average particle size (D50) (also referred to as average diameter) of the aerogel particles can be 0.1 to 1000 µm, but may be 0.5 to 700 µm, may be 1 to 500 µm, may be 3 to 100 µm, and may be 5 to 50 µm. When the average particle size (D50) of the aerogel particles is large, it is easy to obtain aerogel particles excellent in dispersibility, handleability, and the like. On the other hand, when the average particle size (D50) is small, it is easy to obtain aerogel particles excellent in dispersibility. The average particle size (D50) of the aerogel particles can be appropriately adjusted by the pulverization method and pulverization conditions, sieving, classification method, and the like.

The average particle size (D50) of the aerogel particles can be measured by a laser diffraction/scattering method. For example, the aerogel particles are dispersed by adding them to a solvent (ethanol) so that the content of the aerogel particles is 0.05 to 5% by mass, and vibrating for 15 to 30 minutes with a 50 W ultrasonic homogenizer. Thereafter, about 10 mL of the dispersion is injected into a laser diffraction/scattering particle size distribution analyzer, and the particle size is measured at 25°C with a refractive index of 1.3 and an absorption of 0. And, the particle size at a cumulative value of 50% (volume basis) in this particle size distribution is taken as the average particle size D50. As the measuring device, for example, Microtrac MT3000 (product name, manufactured by Nikkiso Co., Ltd.) can be used.

In addition, as the aerogel particles, commercially available products can also be used. Examples of commercially available aerogel particles include ENOVA MT1100 (manufactured by CABOT Corporation), AeroVa (manufactured by JIOS AEROGEL CORPORATION), and the like.

In the present embodiment, the amount of the aerogel particles in the coating liquid is preferably an amount such that the content of the aerogel particles in the composite material is 70% by volume or more, more preferably an amount such that it is 72% by volume or more, and still more preferably an amount such that it is 74% by volume or more, based on the total volume of the composite material. In addition, the amount of the aerogel particles in the coating liquid may be an amount such that the content of the aerogel particles in the composite material is, for example, 99% by volume or less, 98% by volume or less, or 97% by volume or less, based on the total volume of the composite material.

### <Method for Producing Aerogel Particles>

The method for producing the aerogel particles is not particularly limited, but they can be produced, for example, by the following method.

The aerogel particles of the present embodiment can be produced by a production method mainly comprising a sol generation step; a wet gel generation step of gelling the sol obtained in the sol generation step and then aging it to obtain a wet gel; a washing and solvent substitution step of washing and (if necessary) solvent-substituting the wet gel obtained in the wet gel generation step; a drying step of drying the washed and solvent-substituted wet gel; and a pulverization step of pulverizing the aerogel obtained by drying.

Alternatively, they may be produced by a production method mainly comprising a sol generation step; a wet gel generation step; a wet gel pulverization step of pulverizing the wet gel obtained in the wet gel generation step; a washing and solvent substitution step; and a drying step.

The size of the obtained aerogel particles can be further uniformed by sieving, classification, or the like. By uniforming the particle size, dispersibility can be enhanced. "Sol" means a state before a gelation reaction occurs, and in the present embodiment, it means a state in which the above-mentioned silicon compound and, optionally, silica particles are dissolved or dispersed in a solvent. In addition, a wet gel means a wet gel solid that does not have fluidity while containing a liquid medium.

### (Sol Generation Step)

The sol generation step is a step of mixing a silicon compound and, optionally, silica particles (which may be a solvent containing silica particles), performing a hydrolysis reaction, and then generating a sol. In this step, an acid catalyst may be further added to the solvent to promote the hydrolysis reaction. In addition, as shown in Japanese Patent No. 5250900, a surfactant, a thermally hydrolyzable compound, or the like can also be added to the solvent. Furthermore, for the purpose of suppressing heat ray radiation and the like, components such as carbon graphite, an aluminum compound, a magnesium compound, a silver compound, and a titanium compound may be added to the solvent.

As the solvent, for example, water or a mixed liquid of water and alcohol can be used. Examples of the alcohol include methanol, ethanol, n-propanol, 2-propanol, n-butanol, 2-butanol, t-butanol, and the like. Among these, from the viewpoint of reducing the interfacial tension with the gel wall, examples of alcohols with low surface tension and low boiling point include methanol, ethanol, 2-propanol, and the like. These may be used alone or in a mixture of two or more.

For example, when an alcohol is used as the solvent, the amount of the alcohol can be 4 to 8 moles, may be 4 to 6.5, or may be 4.5 to 6 moles, with respect to 1 mole of the total amount of the silicon compound group and the polysiloxane compound group. By setting the amount of the alcohol to 4 moles or more, good compatibility is more easily obtained, and by setting it to 8 moles or less, shrinkage of the gel is more easily suppressed.

Examples of the acid catalyst include inorganic acids such as hydrofluoric acid, hydrochloric acid, nitric acid, sulfuric acid, sulfurous acid, phosphoric acid, phosphorous acid, hypophosphorous acid, bromic acid, chloric acid, chlorous acid, and hypochlorous acid; acidic phosphates such as acidic aluminum phosphate, acidic magnesium phosphate, and acidic zinc phosphate; and organic carboxylic acids such as acetic acid, formic acid, propionic acid, oxalic acid, malonic acid, succinic acid, citric acid, malic acid, adipic acid, and azelaic acid. Among these, as an acid catalyst that further improves the water resistance of the obtained aerogel, an organic carboxylic acid is mentioned. Examples of the organic carboxylic acid include acetic acid, but it may be formic acid, propionic acid, oxalic acid, malonic acid, or the like. These may be used alone or in a mixture of two or more.

By using an acid catalyst, the hydrolysis reaction of the silicon compound can be promoted, and a sol can be obtained in a shorter time.

The amount of the acid catalyst added can be 0.001 to 0.1 parts by mass with respect to 100 parts by mass of the total amount of the polysiloxane compound group and the silicon compound group.

As the surfactant, a nonionic surfactant, an ionic surfactant, or the like can be used. These may be used alone or in a mixture of two or more.

As the nonionic surfactant, for example, a compound containing a hydrophilic part such as polyoxyethylene and a hydrophobic part mainly composed of an alkyl group, a compound containing a hydrophilic part such as polyoxypropylene, and the like can be used. Examples of the compound containing a hydrophilic part such as polyoxyethylene and a hydrophobic part mainly composed of an alkyl group include polyoxyethylene nonylphenyl ether, polyoxyethylene octylphenyl ether, polyoxyethylene alkyl ether, and the like. Examples of the compound containing a hydrophilic part such as polyoxypropylene include polyoxypropylene alkyl ether, a block copolymer of polyoxyethylene and polyoxypropylene, and the like.

Examples of the ionic surfactant include a cationic surfactant, an anionic surfactant, an amphoteric surfactant, and the like. Examples of the cationic surfactant include cetyltrimethylammonium bromide, cetyltrimethylammonium chloride, and the like, and examples of the anionic surfactant include sodium dodecyl sulfonate and the like. In addition, examples of the amphoteric surfactant include amino acid-based surfactants, betaine-based surfactants, amine oxide-based surfactants, and the like. Examples of the amino acid-based surfactant include, for example, acylglutamic acid and the like. Examples of the betaine-based surfactant include, for example, lauryl dimethylaminoacetic acid betaine, stearyl dimethylaminoacetic acid betaine, and the like. Examples of the amine oxide-based surfactant include, for example, lauryl dimethylamine oxide.

These surfactants are considered to act to reduce the difference in chemical affinity between the solvent in the reaction system and the growing siloxane polymer in the wet gel generation step, which will be described later, and to suppress phase separation.

The amount of the surfactant added depends on the type of the surfactant, or the type and amount of the silicon compound, but can be, for example, 1 to 100 parts by mass with respect to 100 parts by mass of the total amount of the polysiloxane compound group and the silicon compound group. The added amount may be 5 to 60 parts by mass.

The thermally hydrolyzable compound is considered to generate a base catalyst by thermal hydrolysis, make the reaction solution basic, and promote the sol-gel reaction in the wet gel generation step described later. Therefore, the thermally hydrolyzable compound is not particularly limited as long as it is a compound that can make the reaction solution basic after hydrolysis, and examples thereof include urea; acid amides such as formamide, N-methylformamide, N,N-dimethylformamide, acetamide, N-methylacetamide, and N,N-dimethylacetamide; and cyclic nitrogen compounds such as hexamethylenetetramine. Among these, urea, in particular, makes it easy to obtain the above-mentioned promotion effect.

The amount of the thermally hydrolyzable compound added is not particularly limited as long as it is an amount that can sufficiently promote the sol-gel reaction in the wet gel generation step described later. For example, when urea is used as the thermally hydrolyzable compound, the amount thereof added can be 1 to 200 parts by mass with respect to 100 parts by mass of the total amount of the polysiloxane compound group and the silicon compound group. The added amount may be 2 to 150 parts by mass. By setting the added amount to 1 part by mass or more, good reactivity is more easily obtained, and by setting it to 200 parts by mass or less, precipitation of crystals and a decrease in gel density are more easily suppressed.

The hydrolysis in the sol generation step depends on the type and amount of the silicon compound, silica particles, acid catalyst, surfactant, etc. in the mixed liquid, but may be performed, for example, for 10 minutes to 24 hours in a temperature environment of 20 to 60°C, or may be performed for 5 minutes to 8 hours in a temperature environment of 50 to 60°C. As a result, the hydrolyzable functional groups in the silicon compound are sufficiently hydrolyzed, and a hydrolysis product of the silicon compound can be more reliably obtained.

However, when a thermally hydrolyzable compound is added to the solvent, the temperature environment of the sol generation step may be adjusted to a temperature that suppresses the hydrolysis of the thermally hydrolyzable compound and suppresses the gelation of the sol. The temperature at this time may be any temperature as long as it can suppress the hydrolysis of the thermally hydrolyzable compound. For example, when urea is used as the thermally hydrolyzable compound, the temperature environment of the sol generation step can be 0 to 40°C, but may be 10 to 30°C.

### (Wet Gel Generation Step)

The wet gel generation step is a step of gelling the sol obtained in the sol generation step and then aging it to obtain a wet gel. In this step, a base catalyst can be used to promote gelation.

Examples of the base catalyst include carbonates such as calcium carbonate, potassium carbonate, sodium carbonate, barium carbonate, magnesium carbonate, lithium carbonate, ammonium carbonate, copper(II) carbonate, iron(II) carbonate, and silver(I) carbonate; bicarbonates such as calcium bicarbonate, potassium bicarbonate, sodium bicarbonate, and ammonium bicarbonate; alkali metal hydroxides such as lithium hydroxide, sodium hydroxide, potassium hydroxide, and cesium hydroxide; ammonium compounds such as ammonium hydroxide, ammonium fluoride, ammonium chloride, and ammonium bromide; basic sodium phosphate salts such as sodium metaphosphate, sodium pyrophosphate, and sodium polyphosphate; aliphatic amines such as allylamine, diallylamine, triallylamine, isopropylamine, diisopropylamine, ethylamine, diethylamine, triethylamine, 2-ethylhexylamine, 3-ethoxypropylamine, diisobutylamine, 3-(diethylamino)propylamine, di-2-ethylhexylamine, 3-(dibutylamino)propylamine, tetramethylethylenediamine, t-butylamine, sec-butylamine, propylamine, 3-(methylamino)propylamine, 3-(dimethylamino)propylamine, 3-methoxyamine, dimethylethanolamine, methyldiethanolamine, diethanolamine, and triethanolamine; and nitrogen-containing heterocyclic compounds such as morpholine, N-methylmorpholine, 2-methylmorpholine, piperazine and its derivatives, piperidine and its derivatives, and imidazole and its derivatives. Among these, ammonium hydroxide (aqueous ammonia) is excellent in that it has high volatility and is less likely to remain in the aerogel particles after drying, so it is less likely to impair water resistance, and is also excellent in terms of economy. The above-mentioned base catalysts may be used alone or in a mixture of two or more.

By using a base catalyst, the dehydration condensation reaction or dealcoholization condensation reaction of the silicon compound and silica particles in the sol can be promoted, and the gelation of the sol can be performed in a shorter time. In addition, a wet gel with higher strength (rigidity) can be obtained thereby. In particular, since ammonia has high volatility and is less likely to remain in the aerogel particles, by using ammonia as a base catalyst, aerogel particles with more excellent water resistance can be obtained.

The amount of the base catalyst added can be 0.5 to 5 parts by mass, but may be 1 to 4 parts by mass, with respect to 100 parts by mass of the total amount of the polysiloxane compound group and the silicon compound group. By setting the amount to 0.5 parts by mass or more, gelation can be performed in a shorter time, and by setting it to 5 parts by mass or less, a decrease in water resistance can be further suppressed.

The gelation of the sol in the wet gel generation step may be performed in a sealed container so that the solvent and the base catalyst do not volatilize. The gelation temperature can be 30 to 90°C, but may be 40 to 80°C. By setting the gelation temperature to 30°C or higher, gelation can be performed in a shorter time, and a wet gel with higher strength (rigidity) can be obtained. In addition, by setting the gelation temperature to 90°C or lower, volatilization of the solvent (especially alcohol) is easily suppressed, so gelation can be performed while suppressing volume shrinkage.

The aging in the wet gel generation step may be performed in a sealed container so that the solvent and the base catalyst do not volatilize. By aging, the bonds of the components constituting the wet gel become stronger, and as a result, a wet gel with high strength (rigidity) sufficient to suppress shrinkage during drying can be obtained. The aging temperature can be 30 to 90°C, but may be 40 to 80°C. By setting the aging temperature to 30°C or higher, a wet gel with higher strength (rigidity) can be obtained, and by setting the aging temperature to 90°C or lower, volatilization of the solvent (especially alcohol) is easily suppressed, so gelation can be performed while suppressing volume shrinkage.

Since it is often difficult to determine the end point of the gelation of the sol, the gelation of the sol and the subsequent aging may be performed continuously in a series of operations.

The gelation time and the aging time can be appropriately set according to the gelation temperature and the aging temperature. When silica particles are contained in the sol, the gelation time, in particular, can be shortened as compared with the case where they are not contained. It is presumed that the reason for this is that the silanol groups or reactive groups that the silicon compound in the sol has form hydrogen bonds or chemical bonds with the silanol groups of the silica particles. The gelation time can be 10 to 120 minutes, but may be 20 to 90 minutes. By setting the gelation time to 10 minutes or more, a homogeneous wet gel is easily obtained, and by setting it to 120 minutes or less, simplification of the washing and solvent substitution step to the drying step, which will be described later, becomes possible. As for the entire process of gelation and aging, the total time of the gelation time and the aging time can be 4 to 480 hours, but may be 6 to 120 hours. By setting the total of the gelation time and the aging time to 4 hours or more, a wet gel with higher strength (rigidity) can be obtained, and by setting it to 480 hours or less, the effect of aging is more easily maintained.

In order to lower the density of the obtained aerogel particles or to increase the average pore size, the gelation temperature and the aging temperature may be raised within the above range, or the total time of the gelation time and the aging time may be lengthened within the above range. In addition, in order to raise the density of the obtained aerogel particles or to reduce the average pore size, the gelation temperature and the aging temperature may be lowered within the above range, or the total time of the gelation time and the aging time may be shortened within the above range.

### (Wet Gel Pulverization Step)

When performing the wet gel pulverization step, the wet gel obtained in the wet gel generation step is pulverized. The pulverization can be performed, for example, by putting the wet gel into a Henschel-type mixer, or by performing the wet gel generation step in a mixer and operating the mixer under appropriate conditions (rotation speed and time). In addition, more simply, it can be performed by putting the wet gel into a sealable container, or by performing the wet gel generation step in a sealable container and shaking for an appropriate time using a shaking device such as a shaker. If necessary, the particle size of the wet gel can also be adjusted using a jet mill, a roller mill, a bead mill, or the like.

### (Washing and Solvent Substitution Step)

The washing and solvent substitution step is a step having a step of washing the wet gel obtained by the wet gel generation step or the wet gel pulverization step (washing step), and a step of substituting the washing liquid in the wet gel with a solvent suitable for the drying conditions (drying step described later) (solvent substitution step). The washing and solvent substitution step can also be carried out in a form in which only the solvent substitution step is performed without performing the step of washing the wet gel, but from the viewpoint of reducing impurities such as unreacted substances and by-products in the wet gel and enabling the production of aerogel particles with higher purity, the wet gel may be washed.

In the washing step, the wet gel obtained by the wet gel generation step or the wet gel pulverization step is washed. The washing can be repeatedly performed, for example, using water or an organic solvent. At this time, the washing efficiency can be improved by heating.

As the organic solvent, various organic solvents such as methanol, ethanol, 1-propanol, 2-propanol, 1-butanol, acetone, methyl ethyl ketone, 1,2-dimethoxyethane, acetonitrile, hexane, toluene, diethyl ether, chloroform, ethyl acetate, tetrahydrofuran, methylene chloride, N,N-dimethylformamide, dimethyl sulfoxide, acetic acid, and formic acid can be used. The above-mentioned organic solvents may be used alone or in a mixture of two or more.

In the solvent substitution step described later, a low-surface-tension solvent can be used to suppress shrinkage of the gel due to drying. However, low-surface-tension solvents generally have extremely low mutual solubility with water. Therefore, when a low-surface-tension solvent is used in the solvent substitution step, examples of the organic solvent used in the washing step include a hydrophilic organic solvent having high mutual solubility with both water and the low-surface-tension solvent. The hydrophilic organic solvent used in the washing step can serve as a preliminary substitution for the solvent substitution step. Among the above-mentioned organic solvents, examples of the hydrophilic organic solvent include methanol, ethanol, 2-propanol, acetone, methyl ethyl ketone, and the like. Methanol, ethanol, methyl ethyl ketone, and the like are excellent in terms of economy.

The amount of water or organic solvent used in the washing step can be an amount that can sufficiently substitute and wash the solvent in the wet gel. The amount can be 3 to 10 times with respect to the volume of the wet gel. The washing can be repeated until the water content in the wet gel after washing is 10% by mass or less with respect to the silica mass.

The temperature environment in the washing step can be a temperature equal to or lower than the boiling point of the solvent used for washing, and for example, when methanol is used, heating to about 30 to 60°C can be performed.

In the solvent substitution step, in order to suppress shrinkage of the aerogel in the drying step, the solvent of the washed wet gel is replaced with a predetermined substitution solvent. At this time, the substitution efficiency can be improved by heating. Specifically, as the substitution solvent, when drying is performed under atmospheric pressure at a temperature below the critical point of the solvent used for drying in the drying step, the low-surface-tension solvents described later are mentioned. On the other hand, when supercritical drying is performed, examples of the substitution solvent include, for example, ethanol, methanol, 2-propanol, dichlorodifluoromethane, carbon dioxide, or a solvent in which two or more of these are mixed.

Examples of the low-surface-tension solvent include a solvent having a surface tension at 20°C of 30 mN/m or less. The surface tension may be 25 mN/m or less, or 20 mN/m or less. Examples of the low-surface-tension solvent include aliphatic hydrocarbons such as pentane (15.5), hexane (18.4), heptane (20.2), octane (21.7), 2-methylpentane (17.4), 3-methylpentane (18.1), 2-methylhexane (19.3), cyclopentane (22.6), cyclohexane (25.2), and 1-pentene (16.0); aromatic hydrocarbons such as benzene (28.9), toluene (28.5), m-xylene (28.7), and p-xylene (28.3); halogenated hydrocarbons such as dichloromethane (27.9), chloroform (27.2), carbon tetrachloride (26.9), 1-chloropropane (21.8), and 2-chloropropane (18.1); ethers such as ethyl ether (17.1), propyl ether (20.5), isopropyl ether (17.7), butyl ethyl ether (20.8), and 1,2-dimethoxyethane (24.6); ketones such as acetone (23.3), methyl ethyl ketone (24.6), methyl propyl ketone (25.1), and diethyl ketone (25.3); and esters such as methyl acetate (24.8), ethyl acetate (23.8), propyl acetate (24.3), isopropyl acetate (21.2), isobutyl acetate (23.7), and ethyl butyrate (24.6) (the values in parentheses indicate the surface tension at 20°C, and the unit is [mN/m]). Among these, aliphatic hydrocarbons (hexane, heptane, etc.) have low surface tension and are excellent in work environment properties. In addition, among these, by using a hydrophilic organic solvent such as acetone, methyl ethyl ketone, or 1,2-dimethoxyethane, it can also be used as the organic solvent in the above-mentioned washing step. Among these, a solvent having a boiling point at normal pressure of 100°C or lower may be used from the viewpoint of easy drying in the drying step, which will be described later. The above-mentioned solvents may be used alone or in a mixture of two or more.

The amount of the solvent used in the solvent substitution step can be an amount that can sufficiently substitute the solvent in the wet gel after washing. The amount can be 3 to 10 times with respect to the volume of the wet gel.

The temperature environment in the solvent substitution step can be a temperature equal to or lower than the boiling point of the solvent used for substitution, and for example, when heptane is used, heating to about 30 to 60°C can be performed.

When silica particles are contained in the gel, the solvent substitution step is not essential. The presumed mechanism is as follows. That is, since the silica particles function as a support for the three-dimensional network skeleton, the skeleton is supported, and shrinkage of the gel in the drying step is suppressed. Therefore, it is considered that the gel can be subjected to the drying step as it is without substituting the solvent used for washing. In this way, by using silica particles, simplification from the washing and solvent substitution step to the drying step is possible.

### (Drying Step)

In the drying step, the wet gel that has been washed and (if necessary) solvent-substituted as described above is dried. As a result, an aerogel (aerogel block or aerogel particles) can be obtained. That is, an aerogel formed by drying the wet gel generated from the sol can be obtained.

The drying method is not particularly limited, and known atmospheric pressure drying, supercritical drying, or freeze drying can be used. Among these, from the viewpoint of easily producing a low-density aerogel, atmospheric pressure drying or supercritical drying can be used. In addition, from the viewpoint of being able to produce at low cost, atmospheric pressure drying can be used. In the present embodiment, atmospheric pressure means 0.1 MPa (atmospheric pressure).

The aerogel can be obtained by drying the wet gel that has been washed and (if necessary) solvent-substituted under atmospheric pressure at a temperature below the critical point of the solvent used for drying. The drying temperature varies depending on the type of the substituted solvent (the solvent used for washing if solvent substitution is not performed), but can be 20 to 150°C, in view of the fact that drying at a particularly high temperature may accelerate the evaporation rate of the solvent and cause large cracks in the gel. The drying temperature may be 60 to 120°C. In addition, the drying time varies depending on the volume of the wet gel and the drying temperature, but can be 4 to 120 hours. It should be noted that accelerating the drying by applying a pressure below the critical point within a range that does not hinder productivity is also included in atmospheric pressure drying.

The aerogel can also be obtained by subjecting the wet gel that has been washed and (if necessary) solvent-substituted to supercritical drying. The supercritical drying can be performed by a known method. As a method of supercritical drying, for example, a method of removing the solvent at a temperature and pressure equal to or higher than the critical point of the solvent contained in the wet gel is mentioned. Alternatively, as a method of supercritical drying, a method is mentioned in which the wet gel is immersed in liquefied carbon dioxide, for example, under conditions of about 20 to 25°C and 5 to 20 MPa, thereby substituting all or part of the solvent contained in the wet gel with carbon dioxide, which has a lower critical point than the solvent, and then removing the carbon dioxide alone or a mixture of carbon dioxide and the solvent.

The aerogel obtained by such atmospheric pressure drying or supercritical drying may be further subjected to additional drying at 105 to 200°C for about 0.5 to 2 hours under normal pressure. This makes it easier to obtain an aerogel with low density and small pores. The additional drying may be performed at 150 to 200°C under normal pressure.

### (Pulverization Step)

When the wet gel pulverization step is not performed, aerogel particles are obtained by pulverizing the aerogel (aerogel block) obtained by drying. For example, it can be performed by putting the aerogel into a jet mill, a roller mill, a bead mill, a hammer mill, or the like, and operating it at an appropriate rotation speed and for an appropriate time.

### <Liquid Medium>

As the liquid medium, an aqueous solvent containing water is preferable. The aqueous solvent may contain an organic solvent in addition to water. The organic solvent may be any one that has compatibility with water, and examples thereof include alcohols such as methanol, ethanol, isopropanol, butanol, ethylene glycol, and propylene glycol; ethers such as diethyl ether, tetrahydrofuran, and 1,4-dioxane; ketones such as acetone and methyl ethyl ketone; carboxylic acids such as acetic acid and propionic acid; and nitrogen-containing compounds such as acetonitrile, dimethylformamide, and triethylamine.

In the present embodiment, the content of the liquid medium in the coating liquid is not particularly limited, and may be appropriately changed according to the desired viscosity of the coating liquid and the like. For example, the content of the liquid medium may be an amount such that the nonvolatile content concentration of the coating liquid is within a suitable range described later.

The nonvolatile content concentration of the coating liquid may be, for example, 10% by mass or more, is preferably 15% by mass or more, and more preferably 20% by mass or more. In addition, the nonvolatile content concentration of the coating liquid may be, for example, 70% by mass or less, is preferably 60% by mass or less, and more preferably 50% by mass or less.

### <Other Components>

In the present embodiment, the coating liquid may further contain other components other than the above.

The coating liquid of the present embodiment may further contain, for example, a thickener, a pigment, a leveling agent, and the like. Examples of the thickener include fine particles such as fumed silica and clay minerals.

Although the preferred embodiments of the present invention have been described above, the present invention is not limited to the above-described embodiments.

### Examples

Hereinafter, the present invention will be described in more detail by way of Examples, but the present invention is not limited to these Examples.

### (Example 1)

### (1) Production of Emulsion

Into a reaction vessel equipped with a stirring device, a thermometer, a cooling tube, and a dropping funnel, 160 parts by mass of ion-exchanged water and 1.2 parts by mass of a nonionic emulsifier (Emulgen 1150S-60, a 60% aqueous solution of polyoxyethylene alkyl ether, manufactured by Kao Corporation, HLB value: 18.5) were charged, stirred, and heated to 65°C, after which dissolved oxygen was removed by purging the reaction vessel with nitrogen.

Next, 274 parts by mass of butyl acrylate, 173.5 parts by mass of methyl methacrylate, 24 parts by mass of 2-hydroxyethyl methacrylate, 9 parts by mass of methacrylic acid, 215 parts by mass of ion-exchanged water, and 48.8 parts by mass of a nonionic emulsifier (Emulgen 1150S-60, a 60% aqueous solution of polyoxyethylene alkyl ether, manufactured by Kao Corporation, HLB value: 18.5) were mixed and emulsified with a homomixer to obtain a monomer emulsion.

3% of this monomer emulsion was charged into the above reaction vessel under stirring, and 0.7 parts by mass of "Trigonox A-W70" (manufactured by Nouryon, a 70% aqueous solution of tert-butyl hydroperoxide) as a radical polymerization initiator and 0.23 parts by mass of ascorbic acid were charged and reacted for 15 minutes. Next, the remaining 97% of the monomer emulsion, a solution of 0.9 parts by mass of "Trigonox A-W70" dissolved in 60 parts by mass of ion-exchanged water, and a solution of 0.37 parts by mass of ascorbic acid dissolved in 60 parts by mass of ion-exchanged water were each dropped into the reaction vessel over 4 hours to react. After completion of the dropping, the mixture was further stirred at 65°C for 1 hour, then cooled to 40°C or lower, and 2.9 parts by mass of 26% concentration aqueous ammonia was added as a neutralizing agent. As a result, an emulsion containing emulsion particles containing a binder resin and a nonionic emulsifier, and water was obtained.

The properties of the emulsion were as follows.
·Nonvolatile content concentration: 49.5% by mass
·Viscosity at 23°C: 35 mPa·s
·pH at 23°C: 8.6
·Minimum film-forming temperature (MFT): 5°C
·Glass transition temperature of binder resin: 9°C
·Average particle size of emulsion particles: 210 nm

### [Measurement of Nonvolatile Content Concentration of Emulsion]

1 g of the emulsion was weighed, placed on an aluminum dish with a diameter of 5 cm, and put into a dryer. While circulating the air in the dryer, it was dried at 1 atm (1013 hPa) and a temperature of 105°C for 1 hour, and the mass of the remaining components was measured. The mass ratio (% by mass) of the above components remaining after drying to the mass of the emulsion before drying (1 g) was calculated and taken as the nonvolatile content concentration (% by mass).

### [Measurement of Viscosity of Emulsion]

Measurement was performed using a BL-type viscometer as a measuring instrument under the conditions of a temperature of 23°C and a rotation speed of 60 rpm.

### [Measurement of pH of Emulsion]

The pH at 23°C was measured using a pH meter (manufactured by TOA DKK Co., Ltd., glass electrode type hydrogen ion concentration indicator HM-30G).

### [Measurement of Average Particle Size of Emulsion Particles]

At 23°C, the average particle size (d50) of the emulsion particles was measured by a dynamic light scattering method (DLS) using MICROTRAC UPA150 (manufactured by MicrotracBEL Corp.).

### [Measurement of Minimum Film-Forming Temperature (MFT)]

The emulsion was applied to the measurement surface of a thermal gradient type MFT measuring instrument using a 0.3 mm applicator and dried in a windless environment. Film formation failure cracks in the dried film were visually observed, and the MFT was measured.

### [Glass Transition Temperature (Tg) of Binder Resin]

The glass transition temperature (Tg) of the binder resin was determined by measuring the temperature dependence of the loss tangent with a rheometer (MCR-102, manufactured by Anton Paar). A parallel plate with a diameter of 12 mm was used, in vibration mode, with a frequency of 1 Hz and a strain of 2%. After dispensing a small amount of the emulsion onto the measurement plate, the plates were brought into contact, and the temperature was raised from 30°C to 180°C at a rate of 10°C/min to remove the volatile components of the emulsion and adhere the resin to the plate. Next, the temperature was lowered from 180°C to 0°C at a rate of 2°C/min, the loss tangent was measured at an interval of 1 point/°C, and the temperature at which the loss tangent was maximum was taken as the glass transition temperature.

### (2) Production of Coating Liquid

Into a 500 mL separable flask, 1 part by mass of Sanjelose 90L (manufactured by Daido Chemical Corporation) as a water-soluble polymer, 9 parts by mass of isopropyl alcohol (manufactured by FUJIFILM Wako Pure Chemical Corporation, reagent), 179 parts by mass of hot water, and 4 parts by mass of glass fibers (manufactured by Nitto Boseki Co., Ltd., product name: CS 3J-891) were placed and stirred for 1 minute at 200 rpm using a mechanical stirrer to obtain a dispersion. Subsequently, while cooling the flask in an ice-water bath, the mixture was stirred at 200 rpm using a mechanical stirrer to dissolve the Sanjelose 90L, thereby obtaining a pre-gel which is an aqueous solution of Sanjelose 90L. Into a planetary mixer (manufactured by PRIMIX Corporation, model 2P-1), 188 parts by mass of the above pre-gel and 21 parts by mass of aerogel particles (manufactured by CABOT, product name: ENOVA MT1100, particle diameter 2 to 24 µm, average particle size (D50) 10 µm) were added and stirred at 25 rpm for 10 minutes. Subsequently, 86 parts by mass of the emulsion obtained in (1) was added and stirred at 25 rpm for 15 minutes to obtain a coating liquid.

Note that in the coating liquid, based on the total volume of solid content, the content of aerogel particles was 84.9% by volume, the content of the water-soluble polymer was 0.3% by volume, and the content of the acrylic resin was 14.1% by volume.

The average diameter of the aggregates of the aerogel particles in the obtained coating liquid was measured by the following method. The results are shown in Table 1.

### <Measurement of Average Diameter of Aggregates of Aerogel Particles>

About 20 g of the coating liquid was placed in a 100 mL poly-cup, and water was added in 2 g portions while stirring with a spatula to dilute it while gradually blending it in. The diluted sample was placed on a glass plate, and the aggregates of the aerogel particles in the coating liquid were observed using an optical microscope (manufactured by OLYMPUS, model number: BX51) to obtain a micrograph. The obtained micrograph was analyzed using the image editing software ImageJ to determine the average diameter of the aggregates of the aerogel particles.

### <Cracking Evaluation>

The coating liquid was applied to a stainless steel plate (100 mm × 70 mm × 0.8 mm) to a thickness of 2 mm with an air spray (Graco Inc. hopper gun, model 25D496), and left at room temperature of 23°C for 12 hours to remove the liquid medium from the coating liquid, thereby obtaining a stainless steel plate with a 1 mm thick composite material. With respect to the obtained composite material, the degree of cracking was evaluated as A when there were no cracks at all, B when there were local cracks, and C when there were cracks all over.

### <Evaluation of Pore Volume of Composite Material>

A composite material was prepared in the same manner as in the above [Cracking Evaluation]. 100 mg of the obtained composite material was collected, and the pore volume was calculated using a high-sensitivity gas adsorption analyzer (manufactured by Quantachrome, AutoSorb iQ).

### <Evaluation of Thermal Conductivity of Composite Material>

A composite material was prepared in the same manner as in the above [Cracking Evaluation]. This operation was repeated to obtain a composite material with a thickness of 3.0 mm. The thermal conductivity of the obtained composite material was measured by a steady-state method with a thermal conductivity measuring instrument "HFM-446" (product name, manufactured by NETZSCH).

### (Example 2)

A coating liquid was produced in the same manner as in Example 1. The obtained coating liquid was drawn into a line under the conditions of 30 kPa and a speed of 20 mm/s using a dispenser equipped with a tapered nozzle with an inner diameter of 1.6 mm (Musashi Engineering, Inc. ML-808GX (dispenser) / SHOTMASTER Ωx (motion unit)), and left at room temperature of 23°C for 12 hours to remove the liquid medium from the coating liquid, thereby obtaining a stainless steel plate with a composite material line with a width of 1.6 mm and a maximum thickness of 0.8 mm. With respect to the obtained composite material, the degree of cracking was evaluated as A when there were no cracks at all, B when there were local cracks, and C when there were cracks all over. Other evaluations were performed in the same manner as in Example 1. The results are shown in Table 1.

### (Comparative Example 1)

A coating liquid was produced in the same manner as in Example 1. 15 g of the obtained coating liquid was placed on a stainless steel plate, swept several times using a disposable spatula (made of PP, manufactured by AS ONE), and left at room temperature of 23°C for 12 hours to remove the liquid medium from the coating liquid, thereby obtaining a stainless steel plate with a 1 mm thick composite material. With respect to the obtained composite material, the degree of cracking was evaluated as A when there were no cracks at all, B when there were local cracks, and C when there were cracks all over. Other evaluations were performed in the same manner as in Example 1. The results are shown in Table 1.

### (Comparative Example 2)

A coating liquid was produced in the same manner as in Example 1. The obtained coating liquid was applied onto a stainless steel plate using a roller (for interior painting finish, pile length 5 mm), and left at room temperature of 23°C for 12 hours to remove the liquid medium from the coating liquid, thereby obtaining a stainless steel plate with a 0.2 mm thick composite material. With respect to the obtained composite material, the degree of cracking was evaluated as A when there were no cracks at all, B when there were local cracks, and C when there were cracks all over. Other evaluations were performed in the same manner as in Example 1. The results are shown in Table 1.

**[Table 1]**

| | Example 1 | Example 2 | Comparative Example 1 | Comparative Example 2 |
|---|---|---|---|---|
| Content of aerogel particles (vol%) | 85 | 85 | 85 | 85 |
| Pore volume (cm³/g) | 1.0 | 1.0 | 1.0 | 1.0 |
| Thermal conductivity (W/(m·K)) | 0.03 | 0.03 | 0.03 | 0.03 |
| Cracking evaluation (23°C) | A | A | B | C |

### (Example 3)

### (1) Production of Aerogel Particles A

100.0 parts by mass of PL-2L (product name, manufactured by Fuso Chemical Co., Ltd.) as a silica particle-containing raw material, 80.0 parts by mass of water, 0.5 parts by mass of acetic acid as an acid catalyst, 1.0 part by mass of cetyltrimethylammonium bromide (manufactured by Wako Pure Chemical Industries, Ltd.) as a cationic surfactant, and 150.0 parts by mass of urea as a thermally hydrolyzable compound were mixed, and to this, 60.0 parts by mass of methyltrimethoxysilane (product name: KBM-13, manufactured by Shin-Etsu Chemical Co., Ltd.) and 20.0 parts by mass of dimethyldimethoxysilane (KMB-22, manufactured by Shin-Etsu Chemical Co., Ltd.) as silicon compounds, and 20.0 parts by mass of a difunctional alkoxy-modified polysiloxane compound at both ends (hereinafter, referred to as "polysiloxane compound A") were added, and reacted at 25°C for 2 hours to obtain a sol. The obtained sol was gelled at 60°C and then aged at 60°C for 48 hours to obtain a wet gel.

The "polysiloxane compound A" was synthesized as follows. First, in a 1-liter three-necked flask equipped with a stirrer, a thermometer, and a Dimroth condenser, 100.0 parts by mass of dimethylpolysiloxane XC96-723 having silanol groups at both ends (product name, manufactured by Momentive Performance Materials Japan LLC), 181.3 parts by mass of methyltrimethoxysilane, and 0.50 parts by mass of t-butylamine were mixed and reacted at 30°C for 5 hours. Thereafter, this reaction liquid was heated at 140°C for 2 hours under a reduced pressure of 1.3 kPa to remove volatile components, thereby obtaining a difunctional alkoxy-modified polysiloxane compound at both ends (polysiloxane compound A).

Thereafter, the obtained wet gel was transferred to a plastic bottle, sealed, and then pulverized for 10 minutes at 27,000 rpm using an Xtreme Mill (MX-1000XTS, manufactured by AS ONE Corporation) to obtain a particulate wet gel. The obtained particulate wet gel was immersed in 2500.0 parts by mass of methanol and washed at 25°C for 24 hours. This washing operation was performed a total of three times while replacing with new methanol. Next, the washed particulate wet gel was immersed in 2500.0 parts by mass of heptane, which is a low-surface-tension solvent, and solvent substitution was performed at 25°C for 24 hours. This solvent substitution operation was performed a total of three times while replacing with new heptane. The washed and solvent-substituted particulate wet gel was dried under normal pressure at 40°C for 96 hours, and then further dried at 150°C for 2 hours. Finally, it was sieved through a sieve (manufactured by Tokyo Screen Co., Ltd., mesh opening 45 µm, wire diameter 32 µm) to obtain aerogel particles A.

### (2) Production of Coating Liquid

A coating liquid was produced in the same manner as in Example 1, except that the aerogel particles were changed to aerogel particles A. The obtained coating liquid was evaluated in the same manner as in Example 1, and the results are shown in Table 2.

### (Example 4)

A coating liquid was produced in the same manner as in Example 1, except that the aerogel particles were changed to aerogel particles A. The obtained coating liquid was evaluated in the same manner as in Example 1, except that cracking was evaluated in the same manner as in Example 2, and the results are shown in Table 2.

### (Comparative Example 3)

A coating liquid was produced in the same manner as in Example 1, except that the aerogel particles were changed to aerogel particles A. The obtained coating liquid was evaluated in the same manner as in Example 1, except that cracking was evaluated in the same manner as in Comparative Example 1, and the results are shown in Table 2.

### (Comparative Example 4)

A coating liquid was produced in the same manner as in Example 1, except that the aerogel particles were changed to aerogel particles A. The obtained coating liquid was evaluated in the same manner as in Example 1, except that cracking was evaluated in the same manner as in Comparative Example 2, and the results are shown in Table 2.

**[Table 2]**

| | Example 3 | Example 4 | Comparative Example 3 | Comparative Example 4 |
|---|---|---|---|---|
| Content of aerogel particles (vol%) | 85 | 85 | 85 | 85 |
| Pore volume (cm³/g) | 0.9 | 0.9 | 0.9 | 0.9 |
| Thermal conductivity (W/(m·K)) | 0.03 | 0.03 | 0.03 | 0.03 |
| Cracking evaluation (23°C) | A | A | B | C |

## Claims

1. A method for producing a composite material, the method comprising:
a coating film formation step of discharging a coating liquid containing aerogel particles, a binder resin, glass fibers, and a liquid medium toward an object to obtain a coating film; and
a removal step of removing at least a part of the liquid medium from the coating film to obtain a composite material.

2. The method for producing a composite material according to claim 1, wherein the coating film formation step is a step of discharging the coating liquid toward the object by means of a discharge device selected from the group consisting of a spray and a dispenser.

3. The method for producing a composite material according to claim 2, wherein the discharge device has a discharge port for discharging the coating liquid, and an inner diameter of the discharge port is 1.5 mm or more.

4. The method for producing a composite material according to claim 1, wherein the coating liquid further contains a water-soluble polymer having a hydrophobic group.

5. The method for producing a composite material according to claim 4, wherein the hydrophobic group is an alkyl group having 6 to 26 carbon atoms.

6. The method for producing a composite material according to claim 1, wherein the coating liquid contains emulsion particles containing the binder resin.

7. The method for producing a composite material according to claim 6, wherein the emulsion particles further contain a nonionic emulsifier.

8. The method for producing a composite material according to claim 1, wherein at least a part of the aerogel particles forms aggregates.

9. The method for producing a composite material according to claim 1, further comprising:
an emulsion preparation step of preparing an emulsion including emulsion particles containing a binder resin and a first liquid medium;
a dispersion preparation step of mixing aerogel particles, glass fibers, and a second liquid medium to obtain a dispersion containing the aerogel particles, the glass fibers, and the second liquid medium; and
a coating liquid preparation step of mixing the emulsion and the dispersion to obtain the coating liquid.

10. The method for producing a composite material according to claim 9, wherein the dispersion preparation step is a step of mixing the aerogel particles, the glass fibers, and the second liquid medium to aggregate at least a part of the aerogel particles, and the coating liquid contains aggregates of the aerogel particles.
